# EUROPEAN PATENT SPECIFICATION

(11) **EP 0 414 954 B1**
(45) Date of publication and mention of the grant of the patent: **16.02.1994**
(21) Application number: 89116167.1
(22) Date of filing: 01.09.1989
(51) Int. Cl.: B60R 25/00, B60N 2/04

(54) **Solenoid powered seat latch preferably for motor cars**
Elektromagnetische Sitzverstellung vorzüglich für Kraftahrzeuge
Verrouillage de siège, commandé par solenoide, de préférence pour voitures à moteur

(43) Date of publication of application: 06.03.1991
(73) Proprietor: LIPOWEC, Walter A., I-20149 Milano (IT)
(72) Inventor: LIPOWEC, Walter A., I-20149 Milano (IT)

(56) References cited:
- EP-A- 0 108 581
- WO-A-81/01121
- FR-A- 2 587 663
- US-A- 3 516 704

## Description

The present invention refers to an electromechanical interlocking device assembled in a compact unit for a) adjusting the longitudinal position of a seat, b) adjusting infinite reclining positions of a back rest being part of said seat, c) pre-setting infinite rearward tilt positions of said back rest, denominated tilt program, d) locking said back rest to a steering wheel, denominated anti-theft back rest latch, e) providing optional an automatic off-power of the seat commands; f) providing optional a seat for a reclining to infinite knee positions.

A system arresting a backrest onto a front wheel similar to the one stated herein is disclosed in European Patent Application Nr. 83306604 (EP-A-0 108 581) and also in WO-A-8 101 121 (corresponding to the preamble of claim 1) as well as in Patent GB-A-2 082 904. The mentioned system refers to the arrest of a backrest onto **fixed** positions by means of a solenoid powered plunger inserting into notches, while the present invention refers to a system arresting a backrest onto **infinite** positions by means of a solenoid powered eccentric disc, wherein said function b) of the present device, if applied to the cited devices, would need the latter to completely change the system. The abovementioned functions of the present device are achieved by means of the technical features disclosed in claim 1. The components of the device are assembled onto and into a tube-shaped axle mounted in the axis of a back rest. Said axle with its flange fixed onto a flat triangular support is anchored to a rail sliding on a track, while the back rest is assembled to the joint of a back wheel reclining on said axle. The interlocking command of the device consists of a first and second electric push button placed between the front seats, the first achieving a longitudinal adjustment of a seat, the second a reclining of said back rest . A third push button, placed doorside upon the back rest, provides a tilt from outside. Said three commands are operating two solenoid plungers, pulled out by a spring when off-power in order to latch and pulled in when on-power in order to unlatch; wherein a back tilt onto a pre-set stop is achieved as well as a forward tilt, the latter by means of a coil-or cylindrical spring; wherein the programming of a tilt stop is achieved by engaging simultaneously both said central commands. Consequently, the program does not change when unlatching alternately the back rest or the seat. Further, the present invention provides a back rest latching onto a steering wheel when operating said doorside back command, this option being equipped with a key in order to secure a motor car against theft; optional too, is an automatic off-power of the electric seat commands, which is to be coupled with a starter lock. Said commands are set out of function when starting a motor vehicle in order to prevent hazardous seat adjustments during the ride.

Known manually operated auto car back rests with a notch mechanism providing a 100% latch surface are performing a tilt or socalled discontinuing latch and, therefore, are adjustable only onto stepped positions, while toothed eccentric latch gears providing about a 30 to 40% latch do not tilt and, therefore, assure a back rest to latch continously also when reclining.

Besides a lack of safety inherent in both said systems, a continuously latching backrest having a seat latching discontinuously is but a hybrid construction. Generally, back rests are mounting horizontally transferable seats with three manual commands respectively three assemblies commonly placed in three different positions; a lever or a knob for adjusting the back, placed in the axis of the back rest; a lever for the back tilt, generally used in two-door cars, placed doorside of the back and a lever for the horizontal adjustment, placed under the seat. Differently, the here described device uses a substantially cost saving single assembly furnishing five electrical seat functions accomplished by two central push buttons and one placed on the back rest.

As to the state of art, known seat adjusters, contrary to the here described device, do not provide interlocking eccentric latches substantially exceeding the safety limits set by the automotive industry. The present invention, instead, uses eccentric latch discs, preferably made of engineering plastics, with sinusoidal shaped latch surfaces engaging over 70% of the surface of toothed eccentric gears. Consequently, the present device is supporting heavier load bearings and providing greater impact strength, thus providing additional safety. Further, toothed eccentric discs corresponding to the current quality standards are normally metal made, while the application of, for instance, polyammidic eccentric discs using the herein proposed curved latch surfaces is thoroughly achievable.

Considering further, that only a smaller portion of the here described assembly is needed to recline a seat also for the adjustment of knee positions , said device is performing a number of functions comparable only to highly priced motorized seat adjusters.

As to be seen, the inventive system differs conceptionally and functionally from known seat latch systems. In the accompanying drawings:

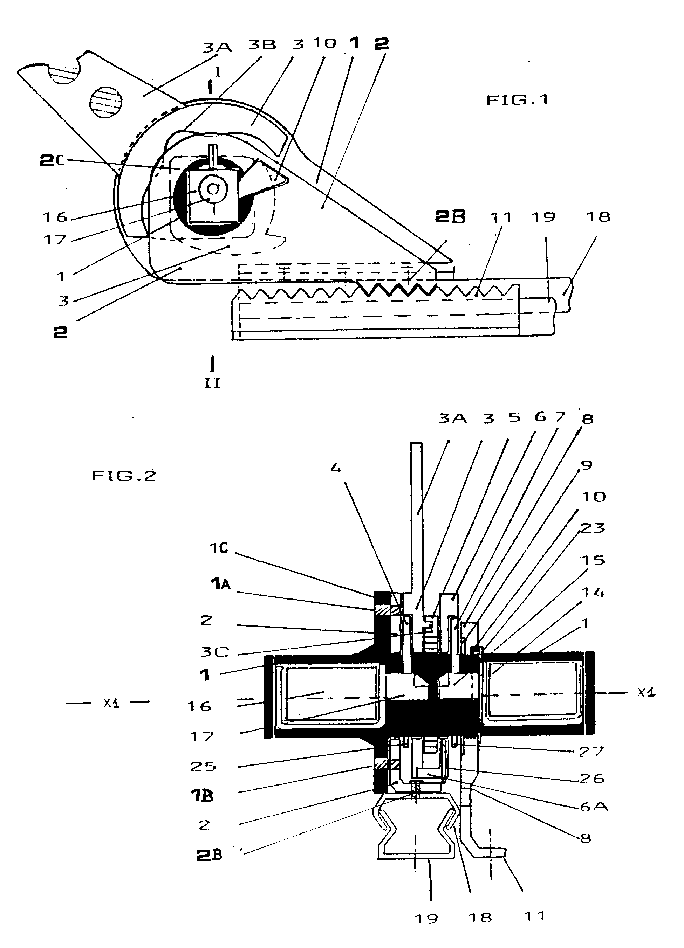

Fig. 1 is a front view of a seat latch device, showing a solenoid 16 with a plunger 17 incorporated in an assembly axle 1, the latter mounting a back wheel 3 with a back joint 3A, said wheel having a sinusoidal shaped latch surface 3B; said axle mounting further a support 2 with the upper part fixed onto a squared flange 1C and with the lower part 1B onto a rail 18, the latter sliding in a track 19; axle 1 further mounts a toothed seat lock 8 latching onto a rack 11 within an angle "alpha" providing a cam 10 for an angular interlocking.

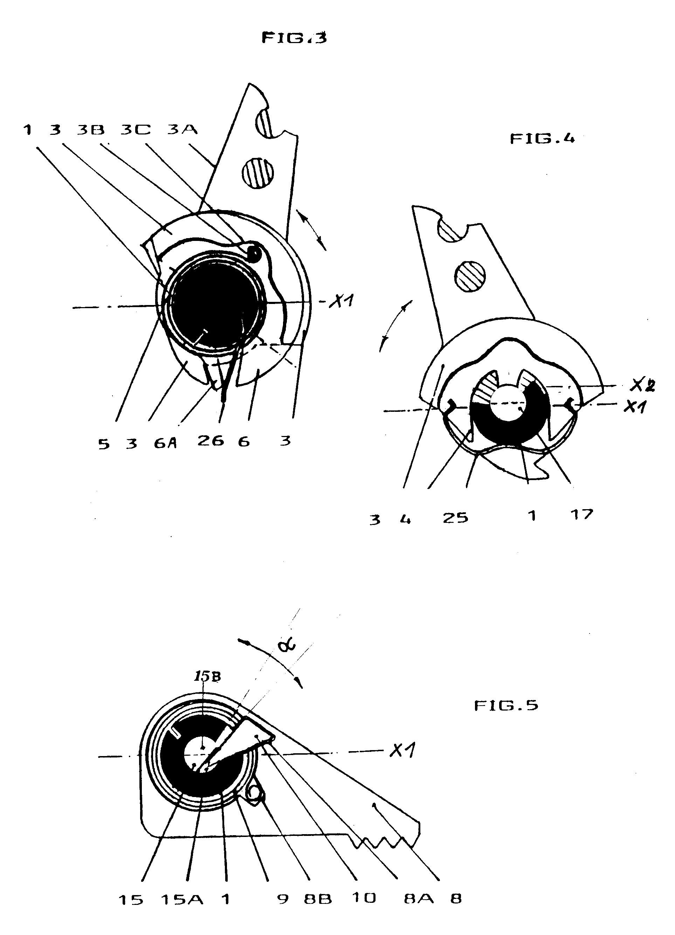

Fig. 2 is a longitudinal section taken along the line II-II of Fig. 1, showing the device latching a back, a back program and a seat; further, axle 1 mounted in axis X1 onto a support 2, the latter fixed to said axle by screws in holes 20 and 21, said support screwed or welded onto rail 18; axle 1 is incorporating a solenoid 16 with plunger 17 and a second solenoid 14 with plunger 15, said axle is also mounting a back wheel 3 with a back joint 3A and a first eccentric disc 4 cooperating with a first tumbler spring 25 - better shown in Fig. 4 . Mounted onto said axle, too, is a first coil spring 5 fixed on one end to said back joint 3A of back wheel 3 and with the other end inserted into axle 1, said spring reclining forward the back rest. A centric back wheel 3 is cooperating with a centric ring 6 having a bracket 6A, wherein sold ring is interlocking with a second eccentric disc 7 by means of a second tumbler spring 27. A seat lock 8 mounted onto said axle interlocks within said angle alpha with a toothed rail 11 by means of a second coil spring 9 and a cam 10; further, a fastening ring 23 is inserted in a key way of said axle, thus arresting the right end of the assembly onto said axle. While back wheel 3, program ring 6 and seat lock 8 are centric reclining in axis X1 and latched when eccentric discs 4 and 7 are in axis X2 both said discs are reclining when in axis X1 as shown in Fig. 4.
Fig. 3 is a front view showing; a forward reclined back wheel 3; a program ring 6 with bracket 6A, a transparent view of a first coil spring 5 fixed on one end to back joint 3A of said back wheel 3 and inserted on the other end into said axle ; back wheel 3 with program ring 6 having a bracket 6A and a flat spur spring 26; further, a sinusoidal shaped internal latch curve 6C of ring 6.
Fig. 4 is a front view of a back wheel 3 latched by eccentric disc 4, a plunger 17 at off-power expelled by means of said spring biased solenoid 16, said plunger engaging said disc 4 onto its max. circumference (level X2) and disengaging the latter at a level X1 when the plunger is retracted by said solenoid on-power; wherein a disengaging of said disc 4 is assisted by said flat curved tumbler spring 25 symmetrically fixed with both ends on said disc and its center curve rotating upon axle 1 causing disc 4 to flex on said plunger from axis X2 to X1.
Fig. 5 is a front view of an angular interlocking toothed seat latch 8, incorporating into a key bed 8B a second coil spring 9, wherein the latter is inserted with its one end in axle 1 and with the other end reclining the seat latch upward within an angle "alpha" when solenoid 14 is on-power; further shown is a triangular cam 10 cooperating with the plunger 15 of a second solenoid 4, said plunger 15 having an upside radial as well as a lateral conical surface 15A; wherein the lateral surface is achieving a reclining of seat latch 8 and the upside surface an interlocking of eccentric ring 7; wherein said reclining and interlocking is accomplished by said solenoid 14 on-power.

As shown in Figs. 1 to 5, the herein disclosed seat device is arresting a back rest by means of a first upside radial conical plunger 17 expelled by a first spring-biased solenoid 16 built in a tube-like axle 1; wherein said plunger at off-power is elevating the eccentric disc 4 upon its maximal circumference from axis X1 to X2, thus locking the external sinusoidal latch surface onto the internal sinusoidal latch surface of back wheel 3, the latter including back joint 3A mounting the upholstery of said back rest. While back wheel 3, at on-power of solenoid 16, rotates on said axle in axis X1, disc 4 in this phase rotates synchron with said wheel on the same axis, i.e. onto a minimum circumference of plunger 17, while tumbler spring 25 cooperates in the latch system the same way as tumbler spring 27, previously described in Fig.4. Therefore, an unlatched back wheel 3 is rotating disc 4 in both directions due to the movement of said back rest, interlocking the same to infinite positions when commanding off- or on-power of first solenoid 16.

In order to tilt a back rest from a forward to a pre-set rearward stop position, a program ring 6, cooperating with eccentric disc 7, latches the back by means of a bracket 6A of said ring. Unlatching said ring 6, said bracket 6A is turning disc 7 counterclockwise when a pressure is exerted against the back, reclining rearward the back rest; viceversa, reclining the same forward by means of a coil spring 5, said bracket is rotating disc 7 clockwise by means of a flat spur spring 26, fixed at one end into axle 1. The interlocking of said seat latch, shown in Fig. 5, and said program achieved by ring 6 in cooperation with eccentric disc 7, as well as the interlocking of the back rest, achieved by back wheel 3 in cooperation with eccentric disc 4 work all according to the same system. Therefore, when selecting a reclining position, back wheel 3 and program ring 6 are always interlocked simultaneously.

Once the stop-position is set, a longitudinal adjustment of a seat cannot change the reclining program because wheel 3 of the back rest holds bracket 6A also when eccentric disc 8 is unlatched. Viceversa, said program cannot be changed when reclining said back rest because eccentric disc 8 latches ring 6 with bracket 6A. Consequently, a reclining program, or socalled pre-set tilt stop of a backrest can only be selected when both push buttons commands, i.e. for the seat and the backrest are being engaged simultaneously. Providing optionally a push button command of said back rest doorside with a special key lock, a motor car can be secured against theft simply reclining the back rest onto a steering wheel. Such an anti-theft reclining is provided by the present invention without adjunct costs.

Further on, the herein described solenoid operated device is providing all seat commands with an automatic off-power by means of an electrical seat circuitry connected to a starter lock interrupting said commands when starting a motor car. Such an arrangement prevents a driver from hazardous seat adjustments during the ride and, consequently, results in higher road safety for passengers and pedestrians.

## Claims

1. A solenoid operated device for interlocking a horizontally transferable seat with a reclining back rest, preferably for motor vehicles, comprising the following components:
- an assembly axle (1) mounted onto a support (2) in the pivot axis of said back rest, said support (2) being anchored onto a sliding structure (18, 19) of said seat;
- a seat lock (8), a back wheel (3) with a joint (3a) for said back rest, and a ring (6) cooperating with said back wheel, these three components (8, 3, 6) of said device reclining centric on the circumference of said axle (1) having an axis X1;
- a first coil spring (5) having one end fixed onto said axle;
- a first (16) and a second (14) solenoid built into said axle (1), both solenoids (16 resp.14) having plungers (17 resp. 15) retracting against the action of a respective spring when said solenoids are on-power;
wherein all said components (1,2,8,3,6,5,9,16,14) are assembled onto said axle (1) in a single unit performing:- a reclining of the back rest and a tilt program of the same to different positions; the latching of said back rest onto the steering wheel in order to secure a motor car against theft; and the longitudinal transfer of the seat having said back rest,
characterised in that
a) said ring (6) comprises a bracket (6a) cooperating with said back wheel (3), both said ring (6) and back wheel (3) having internal sinusoidal curved latch surfaces;
b) a first (4) and a second (7) eccentric disc having outside sinusoidal curved latch surfaces are further provided reclining on said axle (1) centric (level X1) and latching eccentric (level X2);
c) a flat spur spring (26) and a second coil spring (9) are provided in addition to said first coil spring (5);
d) said first solenoid (16) has an upside conical plunger (17), whereas the plunger (15) of said second solenoid (14) has an upside radial as well as a lateral conical surface (15a) in order to interlock simultaneously said second eccentric disc (7) and said seat lock (8);
thereby performing reclining and tilt program of the back rest to infinite positions.

2. The device of claim 1, wherein said back rest latches when said first eccentric disc (4) inserts into said back wheel (3) by means of a first spring-expelled conical plunger (17), the latter elevating the disc (4) onto the maximal conical circumference of said plunger; wherein, said seatback unlatches when the plunger is retracted by said first solenoid on-power operated by a first central or by a lateral push button of the back rest; wherein said eccentric disc (4) resets onto a minimum circumference of the conical plunger, assisted by a flat tumbler spring (25) fixed at both ends onto said eccentric disc (4) and the centre upon the circumference of said axle (1); wherein a reclining angle of said back rest is the angle of an open sector in said axle for the reclining of said disc.

3. The device of claim 1 or 2, wherein said backrest is rearward tilting onto a programmed stop by means of a program ring (6), the latter turning clockwise by the force of a flat spur spring (26) having an internal end inserted in said axle and the external end pulling the program ring; wherein said operations is assisted by a bracket (6A) of the ring (6), linked to said back wheel (3), and by a first coil spring (5) pulling said wheel (3), linked to said back rest, forward; wherein said program ring is turning by means of said bracket, counterclockwise when pulling rearward the back rest.

4. The device of claim 1, wherein a toothed or notched seat latch (8) interlocks with a rack (11), fixed onto a motor car chassis; wherein said second plunger (15) is upside conical to interlock the program but also laterally conical (15A) to interlock synchronously the seat latch, too ; wherein a cam (10) is reclining said seat latch (8) onto said rack (11); wherein a downward reclining of said cam is achieved by said lateral conical part (15A) of said plunger (15) when being expelled; wherein an upward reclining of said cam is achieved by retraction of said plunger; wherein the interlocking of said seat latch is assisted by a second coil spring (9) having one end inserted into said axle (1) and the other end upward reclining said seat latch (8); wherein the interlocking of the latter is synchron with the interlocking of the program, both operations being achieved by the central seat latch push button; wherein an interlocking arc "alpha" of said seat latch is the arc of an open sector provided in said axle (1).

5. The device of any of claims 1 to 4, wherein a disengagement of said seat latch and said backrest is simultaneously achieved, thus permitting the latter to be pre-set to a permanent tilt stop by means of a contemporaneous command of both central push buttons; wherein said permanent tilt stop does not change when engaging alternately one or the other central or only the lateral command on the backrest, doorside.

6. The device of any of claims 2 to 4, wherein all seat commands are off-power prior to the start of a motor car provided that the electrical circuitry of a starter lock is connected with said seat commands.

7. The device of claim 2, wherein a latch of said backrest onto a steering wheel is achieved when engaging said lateral command, doorside; wherein the latter can be blocked using a key lock for the interruption of the circuitry, whereby a combination of said lock with an alarm device is optional.

8. The device of claim 1, wherein said axle and said latching components are preferably made in engineering plastics, thereby improving the impact strength and safety.

## Patentansprüche

1. Eine elektromagnetische Vorrichtung zur Verstellung eines waagrecht verschiebbaren Sitzes mit schwenkbarer Rueckenlehne, vorzueglich fuer Kraftfahrzeuge, gekennzeichnet durch folgende Teile:
- eine Montage-Achse (1), gelagert auf einer Montage-Stuetze (2) in der Schwenkachse der besagten Lehne, wobei die besagte Stuetze an einen Sitz-Schlitten (18, 19) befestigt ist;
- ein Sitzriegel (8), ein Lehnen-Schwenkrad (3) mit Lehnen = Stuetze (8a), ein Einstell-Ring (6), letzterer zusammenwirkend mit besagten Schwenkrad, also drei Teile (8, 3, 6) der besagten Vorrichtung die am Umfang der Achse (1) in Axe X1 zentrisch schwenken;
- eine erste Spiral-Feder (5), befestigt mit dem inneren Ende an der besagten Achse;
- ein erster (16) und ein zweiter (14) Elektromagnet eingebaut in Achse (1), beide besagten Elektromagnete mit Magnetbolzen (17 resp. 15) die bei Stromerregung gegen eine Federkraft der besagten Magnete anziehen;
wobei alle besagten Teile (1,2,8,3,6,5,9,16,14) eine an Achse (1) montierte Aggregateinheit bilden und zwar mit folgenden Funktionen: Schwenken der besagten Rueckenlehne und dessen Einstellung in verschiedenen Lehn-Positionen; Sperre der besagten Lehne an das Lenkrad zur Sicherung des Kraftfahrzeugs gegen Diebstahl; waagrechter Verschub des Sitzes mit besagter Rueckenlehne;
dadurch gekennzeichnet, dass
a) ein Einstellring (6) einen Anschlag (6A) besitzt und somit ein Mitschwenken mit Lehenrad (3) bewirkt; dass der besagte Einstellring sowie das Lehnenrad (3) eine innere vorzugsweise sinusoidal geformte Verschlussflaeche aufweisen;
b) eine erste (4) und zweite (7) exzentrisch wirkende Riegelscheibe am auesseren Umfang eine sinusoidal geformte Verschlussflaeche aufweisen; dass die beiden besagten Riegelscheiben in Axe X1 schwenken und in Axe X2 sperren;
c) eine flache Zungenfeder (26) und eine zweite Spiralenfeder (9), zusaetzlich zu Spiralenfeder (5), zusammenwirken;
d) der besagte erste Elektromagnet (16) einen Magnetbolzen (17) mit oben konisch verlaufender Oberflaeche aufweist, waehrend der zweite Elektromagnet (14) einen Magnetbolzen (15) besitzt der sowohl oben konisch wie auch eine seitlich konisch (15a) verlaufaeuft aufweist, dies um ein gleichzeitiges Oeffnen und Schliessen der zweiten Riegelscheibe (7) zusammen mit der Sitzsperre (8) zu gewaehrleisten;
womit sowohl ein Schwenken wie auch eine Voreinstellung der Lehenenposition stufenlose durchfuehrbar ist.

2. Vorrichtung nach Anspruch 1, dadurch gekennzeichnet, dass die besagte Rueckenlehne verriegelt, wenn die exzentrisch sperrende Riegelscheibe (4) in das Lehenschwenkrad (3) einrastet und zwar durch Vorschnellen des nach oben konisch verlaufenden Magnetbolzen (17), ausgeleost durch eine Feder in Elektromagnet (16), wodurch die besagte Riegelscheibe am maximalen Umfang des besagten Bolzens, also auf eine hier bezeichnete Exzenter-Axe X2 anhebt; dass die besagte Rueckenlehne entriegelt, wenn der besagte Bolzen vom Elektromagnet (16) durch Stromanregung infolge Betaetigung eines ersten zentral oder an der Lehne, tuerseitig, angebrachten Druckschalters angezogen wird; dass hiebei und in Zusammenarbeit mit einer ersten Fluegelfeder (25) die angehobene Riegelscheibe (4) am minimalen Umfang des besagten Bolzen, also auf eine hier bezeichnete Mittel-Axe X1 absetzt, wobei beide Enden der besagten Feder unter die Riegelscheibe (4) eingreifen waehrend der Mittelbogen am Umfang der Achse (1) aufliegt; dass der Schwenkwinkel der besagten Lehne dem Winkel in einem offenen Sektor in Achse (1), vorgesehen fuer die Lehnenschwenkteile, entspricht.

3. Vorrichtung nach Anspruch 1 und 2, dadurch gekennzeichnet, dass die besagte Lehne bis zu einem vorbestimmten Anschlag mittels Einstellring (6) rueckschwenkt, wobei der Ring infolge Druck einer flachen Zungenfeder (26) im Uhrzeigersinn an der besagten Achse dreht, insoferne als das innere Ende an der Achse festhaelt, waehrend das aeussere Ende den Ring (6) zum Nachlauf des Schwenkrads (3) bewirkt; dass Ring (6) das besagte Schwenkrad mittels Anschlag (6A) verbindet und diese besagten Teile infolge Druck einer ersten Spiralfeder (5) vorwaerts schwenken; dass diese Teile bei Schulterdruck auf die Lehne gegen den Uhrzeigersinn drehen.

4. Vorrichtung nach Anspruch 1, dadurch gekennzeichnet, dass ein mit einer keilfoermigen Nocke (10) und gezahnter oder mit Kerben versehener Sitzriegel (8) mit einer am Chassisboden montierten Riegelschiene (11) zusammenarbeitet; dass ein zweiter nach oben konisch verlaufender Magnetbolzen (15) fuer die Lehneneinstellung mit einer seitlich konisch geformter Flaeche (15A) desselben fuer die Sitzeinstellung synchron zusammenarbeitet; dass eine schliessende Winkelbewegung der besagten Nocke bei Ausstoss des besagten Magnetbolzen erfolgt; dass eine oeffnende Winkelbewegung der Nocke bei Anziehen des besagten Bolzen erfolgt; dass eine zweite Spiralfeder (9), dessen innere Ende in Achse (1) und das aeussere Ende am Sitzriegel befestigt ist, die besagte Nockenbewegung begleitet; dass das Einstellen einer Lehenenposition und die Entriegelung eines Sitzes durch gleichzeitige Betaetigung beider besagter zentraler Druckschalter erfordert; dass eine Neigung des besagten Sitzriegels im Verhaeltnis zu einem Winkel "alpha" eines offenen Sektors in Achse (1) steht.

5. Vorrichtung nach Anspruch 1 bis 4, dadurch gekennzeichnet, dass das gleichzeitige Entriegeln eines Sitzes und einer Rueckenlehne die Einstellung einer konstanten Lehenposition zu einem waehlbaren Anschlag stufenlos ermoeglicht; dass sich der besagte Lehnen-Anschlag bei Betaetigung nur einer der beiden zentralen Druckschalter oder des an der Lehne tuerseits befindlichen Druckschalters nicht veraendert.

6. Vorrichtung nach Anspruch 2 bis 4, dadurch gekennzeichnet, dass eine automatische Stromunterbrechung aller Druckschalter bei Anlassen eines Motors erfolgt vorausgesetzt, dass ein elektrischer Schaltplan fuer ein Zuendschloss eine derartige Funktion vorsieht.

7. Vorrichtung nach Anspruch 2, dadurch gekennzeichnet, dass eine Sperre der besagten Rueckenlehne an ein Lenkrad nach Betaetigung des besagten Lehnen-Druckschalters erfolgt; dass dieser Druckschalter optionell mit einem Sicherheitsschloss versehbar ist, welches sowohl eine Stromunterbrechung des Lehnenschalters herbeifuehrt wie auch eine Alarmanlage aktiviert.

8. Vorrichtung nach Anspruch 1, dadurch gekennzeichnet, dass die besagte Achse und die besagten Riegelkomponente vorzueglich aus hochwertigen Plastikmaterial hergestellt werden um sowohl die Widerstandskraft der Teile und, nicht zuletzt, die Sicherheit des Kraftfahrzeugs zu verbessern.

## Revendications

1. Un solénoide a actioné un dispositif pour enclencher un siège transférable horizontalement avec un dossier réglable, de préferènce pour véhicules à moteur, comprenant les composants suivants:
- un essieu d'assemblage (1) monté sur un support (2) dans l'axe du pivot du dossier mentioné, le dit support (2) étant ancré sur la glissière (18, 19) du dit siège;
- un loquet du siége (8), un disque arriére (3) avec une jointure (3a) pour le dit dossier, et un anneau (6) agissant en coopération avec le dit disque arriére, ces trois composants (8, 3,6) du dit dispositif central de réglage sur la circonférence du dit essieu (1) ayant un axe X1;
- un premier ressort en spiral (5) ayant une extrémité fixée sur le dit essieu;
- un premier (16) et un second (14) solénoide obtenu dans le dit essieu (1), les deux solénoides (16 resp. 14) ayant les chevilles (17 resp. 15) se retractant grace à l'action d'un resort correspondant quand les dit solénoides sont branchés;
Là où tous les dits composants (1,2,8,3,6,5,9,16,14) sont assemblés dans le dit essieu (1) obtenant un ensemble unitaire qui performe:
- le réglage du dossier et un programme d'inclination du dossier meme dans les differentes positions; le blocage du dit dossier contre le volant pour assuré le véhicule contre le vol; et le transfert longitudinal du siège ayant le dit dossier, caracterisé dans cela
a) le dit anneau (6) comprend un tasseau (6a) agissant avec le dit disque arrière (3), les deux, dit anneau (6) et dit disque arrièr (3), ayant des surfaces internes de blocage sinusoidalement courbées;
b) un premier (4) et un second (7) disque excentrique, ayant des surfacers extérieures de blocage sinusoidalement courbées sont de plus concus pour etre réglé sur le dit essieu (1) central (niveau X1) et bloqué excentriquement (niveau X2);
c) un ressort plat stimulant (26) et un second ressort en spiral (9) sont joint au dit premier ressort en spiral (5);
d) le dit premier solénoide (16) a une cheville avec le coté haut conique (17), alors que la cheville (15) du second solénoide a le coté haut radial aussi bien que la surface latérale conique (15a) de sorte à enclencher simultanément le dit second disque excentrique (7) et le dit loquet du siège (8);
- de la sorte la performence du siège reglable et du programme d'inclination du dossier permet une infinité de positions.

2. Le dispositif selon la revendication 1 , dans lequel le dit dossier se bloque quand le dit premier disque excentrique (4) pénétre dans le dit disque arrière (3) à l'aide de la dite premiere cheville conique (17) ejectable par le ressort, ce ci elevant le dit disque dans la plus grande circonferance conique de la dite cheville; dans lequel le dit dossier se debloque quand la dite cheville est rétracté à l'aide du dit premier solénoide en marche, branché par un premier interrupteur central ou par un interrupteur lateral positioné sur le dossier; dans lequel le dit disque excentrique (4) se place dans une circonférénce minimal de la dite cheville conique, assisté par un ressort plat oscillant (25), les deux extrémités fixées dans le dit disque excentrique (4) et le centre sur la circonférence du dit essieu (1); dans lequel l'angle d'inclination du dit dossier est l'angle du secteur ouvert dans le dit essieu pour la regulation du dit disque.

3. Le dispositif selon la revendication 1 et 2, dans lequel le dit dossier est incliné en arrière sur un arret programmé à l'aide d'un anneau de programme (6), ce dernier tourné en sens oraire par un ressort plat stimulant (26) ayant une extrémité intérieur inserée dans le dit essieu et l'extrémité extérieur tirant le dit anneau de programme; dans lequel la dite opération est assistée par un tasseau (6a) de l'anneau (6), unit au dit disque arrière (3), et par un premier ressort en spiral (5) tirant en avant le dit disque (3), unit au dit dossier; dans lequel le dit anneau de programme est tourné grace au dit tasseau en sens inverse des aiguilles d' une montre quand on tire en arrière le dossier.

4. Le dispositif selon la revendication 1, dans lequel un loquet du siège denté ou encoché (8) s'enclenche avec une crémaillère (11), fixée sur le chassis d'une voiture à moteur; dans lequel la dite seconde cheville (15) est conique sur le dessus pour enclencher le programme, mais aussi conique latéralement (15a) pour enclencher synchroniquement le loquet du siége, de meme; dans lequel un came (10) est en train de régler le dit loquet du siége dans la dite crémaillère (11); dans lequel un mouvement vers le bas du dit came est obtenu par le coté latéral conique (15a) de la dite cheville quand elle est expulsée; dans lequel un réglage en avant du dit came est obtenu par la rétraction de la dite cheville; dans lequel l'enclenchement du dit loquet du siége est assisté par un second ressort en spiral (9) ayant une extrémité insérée dans le dit essieu (1) et l'autre extrémité réglant vers le haut le dit loquet du siége (8); dans lequel l'enclenchement de celui ci est en synchronie avec l'enclenchement du programme, les deux opérations étant obtenues par le seul interrupteur du loquet du siége central; dans lequel un arc "alpha" d'enclenchement du dit loquet du siége est l'arc d'un secteur ouvert disposé sur le dit essieu (1).

5. Le dispositif selon chacune des revendications de 1 à 4, dans lequel le désengagement du dit loquet du siège et du dit dossier est simultanément obtenu, ainsi permettant ce dernier de etre pré - réglé dans une inclination fixe à l'aide de la commande contemporaine des deux dits interrupteurs centraux; dans lequel la dite inclination fixe ne change pas quand en engageant alternativement une des autres commandes centrales ou seulement la commande latérale du dossier, à coté de la porte.

6. Le dispositif selon chacune des revendications de 2 à 4, dans lequel toutes les commandes de siège sont débranchées avant le démarage de la voiture à moteur tenu compte que le circuit électrique du loquet de demarage est connecté avec les dites commandes du siège.

7. Le dispositif selon la revendication 2, dans lequel un loquet du siège arrière sur le volant, est obtenu en engageant la dite commande latérale du coté de la porte; dans lequel cette dernière peut etre assurée utilisant, optionalement, une serrure à clef qui interrompe le circuit électrique et déclenchant au meme temps le dispositif d'alarme.

8. Le dispositif selon la revendication 1, dans lequel le dit essieu et les dit composants sont de préférence fait de plastiques étudiés exprés, afin d'augmenter la resistance à l'impacte et la sécurité.
